## Europäisches Patentamt
## European Patent Office
## Office européen des brevets

(19)

(11) Veröffentlichungsnummer : **0 074 331**
**B1**

(12)
# EUROPÄISCHE PATENTSCHRIFT

(45) Veröffentlichungstag der Patentschrift :
**09.10.85**

(51) Int. Cl.⁴ : **A 61 C 3/03, A 61 C 3/06, A 61 C 1/05**

(21) Anmeldenummer : **82810328.3**

(22) Anmeldetag : **05.08.82**

(54) **Auf ein Gerät für die Zahnbehandlung steckbare Vorrichtung, insbesondere zur Behandlung von Interdentalflächen.**

(30) Priorität : 04.09.81 CH 5702/81

(43) Veröffentlichungstag der Anmeldung :
**16.03.83 Patentblatt 83/11**

(45) Bekanntmachung des Hinweises auf die Patenterteilung : **09.10.85 Patentblatt 85/41**

(84) Benannte Vertragsstaaten :
**AT BE DE FR GB SE**

(56) Entgegenhaltungen :
**CH-A- 413 222
DE-A- 1 766 651
US-A- 1 354 139
US-A- 2 707 329
US-A- 3 823 477**

(73) Patentinhaber : **Intensiv SA
Via Molinazzo 11
CH-6962 Viganello (CH)**

(72) Erfinder : **Hubschmid, Walter**

**CH-6911 Carabietta (CH)**

(74) Vertreter : **Seehof, Michel et al
c/o AMMANN PATENTANWAELTE AG BERN
Schwarztorstrasse 31
CH-3001 Bern (CH)**

EP 0 074 331 B1

## Beschreibung

Die vorliegende Erfindung bezieht sich auf eine auf ein Gerät für die Zahnbehandlung steckbare Vorrichtung, insbesondere zur Behandlung von Interdentalflächen, mit einem Winkelstück, in dem eine rotierende Bewegung in eine Hin- und Herbewegung umgewandelt wird und in dessen Kopf eine hin- und herbewegbare hohle Werkzeughalterung vorgesehen ist, in der eine aus flexiblem Material bestehende Feile eines Werkzeugsatzes abnehmbar befestigt ist. Ein solches Gerät ist in der DE-A-1 766 651 beschrieben und weist einen Werkzeugsatz mit im Profil dreikantigen Feilen mit vollem Halteteil auf. Ausserdem wird das bei der Benutzung von Feilen verwendbare Wasser ausserhalb des Winkelstückes gegen die Feile geführt.

In der US-A-1 354 139 ist eine ähnliche Vorrichtung beschrieben, wobei die Feile einen hohlen Halteteil aufweist und auf einen hin- und herbewegbaren fingerförmigen Werkzeughalter aufgesteckt wird.

Es ist nun Aufgabe der vorliegenden Erfindung, eine Vorrichtung anzugeben, mit welcher eine wesentlich verbesserte Behandlung der Interdentalflächen durch diamantbeschichtete Feilen möglich ist, insbesondere eine feine Konturierung auch konkaver, proximaler Füllungsflächen und Kronenränder und eine rationelle Überschussentfernung auch in engen Interdentalräumen möglich ist. Diese Aufgabe wird mit einer in den Ansprüchen beschriebenen Vorrichtung gelöst.

Im folgenden wird die Erfindung anhand einer Zeichnung eines Ausführungsbeispiels näher erläutert werden.

Figur 1 zeigt eine Draufsicht auf eine Feile der erfindungsgemässen Vorrichtung,

Figur 2 zeigt die Feile von Figur 1 von vorne,

Figur 3 zeigt die eingesteckte Feile von Figur 1,

Figur 4 zeigt eine Draufsicht auf die Winkelzuführung, und

Figur 5 zeigt, schematisch, eine Anwendung der erfindungsgemässen Vorrichtung.

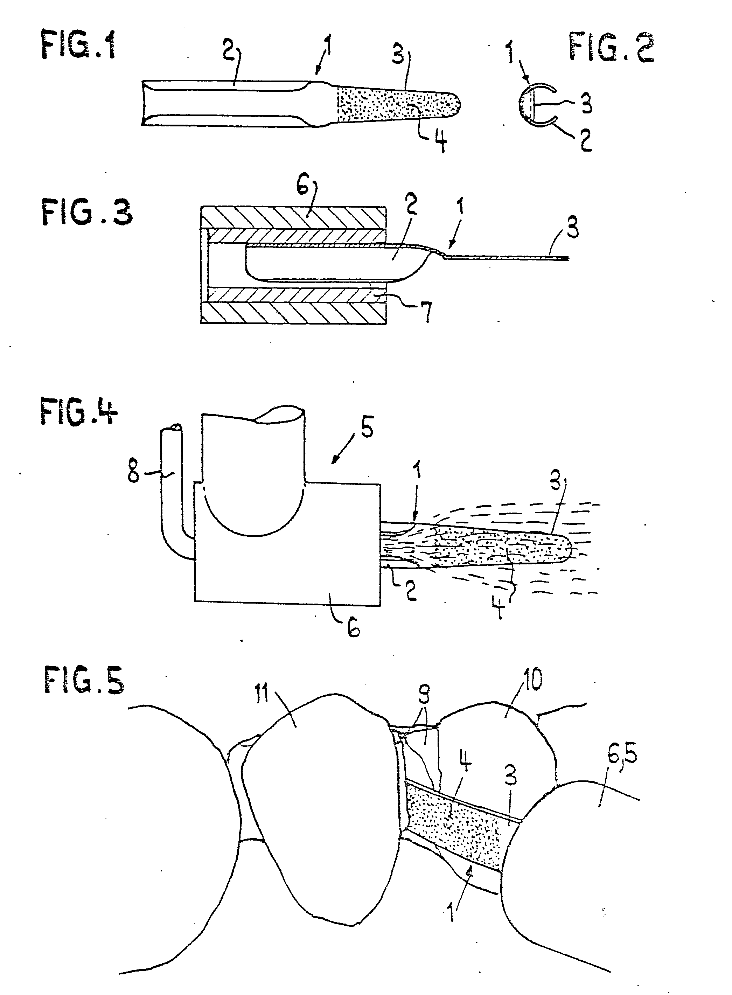

Man erkennt in Figur 1 eine Feile 1 aus dem Werkzeugsatz, wobei diese Feile aus einem durchgehend hohlen Halteteil 2 und einem einseitig mit Diamantkorn 3 beschichteten Bearbeitungsteil 4 besteht. Die ganze Feile besteht aus einem dünnen Stahlblech, wobei das Halteteil 2 zu einem nicht ganz geschlossenen Zylinder geformt ist. Wie aus Figur 4 hervorgeht, hat dieser Zylinder die Aufgabe, das Wasser in möglichst idealer Weise an den Bearbeitungsteil heranzuführen. Dieser Bearbeitungsteil 4 ist infolge seiner geringen Dicke, etwa 0,1 bis 0,2 mm, je nach Anwendungszweck, biegsam, und kann sich daher leicht der Form des zu bearbeitenden Teiles anpassen. Auch ist es damit möglich, bis anhin unzugängliche interdentale Flächen zu erreichen und zu bearbeiten. Die für jeden Bearbeitungsvorgang beste Flexibilität wird durch die Wahl des Materials und durch die Auswahl der geeigneten Dicke desselben ermöglicht. Um perfekt adaptierte und polierte proximale Füllungsflächen, bzw. Kronenränder zu erhalten, welches die Voraussetzung für die Gesunderhaltung des benachbarten Paradonts sind, ist es notwendig, die Diamantkörnung abzustufen, um ein situationsgerechtes Vorgehen, d. h. von der Entfernung grober Ueberschüsse bis zur Vorpolitur zu gewährleisten. Versuche haben gezeigt, dass ein Werkzeugsatz, bestehend aus drei flexiblen, einseitig diamantierten Feilen und ein Kunststoffeinsatz zur Politur die gestellten Bedingungen optimal erfüllt. Die erste, relativ grobe Feile weist eine Diamantbeschichtung mit einer mittleren Korngrösse von etwa 80 $\mu$m auf, wodurch am besten grosse, überhängende marginale Irritationen oder abstehende Kronenränder weggeschliffen werden können. Die mittlere Feile weist eine Beschichtung mit einer mittleren Korngrösse von etwa 40 $\mu$m auf und gestattet, die proximalen Füllungsflächen und Kronenränder zu konturieren, und die feine Feile weist eine Beschichtung mit einer mittleren Korngrösse von etwa 15 $\mu$m auf, mit der es möglich ist vorzupolieren. Das vierte Instrument ist ein an sich bekannter Plastikansatz, mit welchem man auch ohne Wassersprühen, aber mit einem Poliermittel abschliessend auf Hochglanz polieren kann.

Diese Diamantabrasivkörper werden durch Amalgam rasch verschmiert und unwirksam. Daher müssen die Diamantfeilen mit einem Spezialgummi von den Amalgamresten befreit werden. Zu diesem Zwecke werden die amalgamverschmierten Instrumente getrocknet, in das Gerät eingesetzt und in Bewegung gegen den Spezialgummi gedrückt.

Das Winkelstück 5, siehe Figur 4, weist einen Kopf 6 auf, in welchem eine hin- und hergleitende Werkzeughalterung 7 angeordnet ist, siehe Figur 3. Diese Werkzeughalterung 7 ist als Hohlzylinder ausgebildet, in welchem der Halteteil 2 des Werkzeuges eingeführt werden kann. Da der zylindrische Halteteil 2 nicht vollständig geschlossen ist, wirkt er als Feder, so dass eine feste Haftung gewährleistet ist. Wie aus Figur 4 hervorgeht, ist in den Kopf 6 des Winkelstücks eine Wasserzuleitung 8 eingeführt, die bei der hohlen Werkzeughalterung 7 mündet. Dadurch gelangt das Wasser durch die Zuleitung 8 in die hohle Werkzeughalterung 7 und durch den hohlen Halteteil 2 auf die Bearbeitungsfläche 4. Eine solche Sprühanordnung gewährleistet eine optimale Schmierung, Kühlung und ein Wegschaffen des abgeschliffenen Materials. Das Winkelstück wird auf hier nicht gezeigte und an sich bekannte Weise auf das Gerät für die Zahnbehandlung, d. h. ein Bohrgerät, aufgesetzt. In diesem an sich bekannten Winkelstück wird die rotierende Bewegung der Welle des Gerätes für die Zahnbehandlung in eine hin- und hergehende Bewegung umgewandelt.

In Figur 5 sieht man, schematisch dargestellt, die Bearbeitung einer Füllung 9 zwischen zwei Zähnen 10 und 11 mittels einer eingesetzten Feile 1. Die dargestellten Dimensionen sind ungefähr massstabgetreu und man ersieht daraus, dass die Feile sehr gut zwischen die beiden Zähne dringen kann, um die Füllung derart zu bearbeiten, dass die volle Prophylaxefähigkeit erstellt werden kann. Zweckmässig wird ohne jeden Druck gearbeitet und eine gut angepasste Tourenzahl beträgt etwa 3 000 Umdrehungen pro Minute, d. h. 6 000 Bewegungen pro Minute.

Mit Hilfe einer solchen Vorrichtung mit einem angepassten Werkzeugsatz ist es möglich, die rationelle Abtragung von groben proximalen Ueberschüssen aus Amalgam oder Komposit, das Trimmen von abstehenden Kronenrändern aus Gold oder Keramik vorzunehmen, und zwar im Seiten- und Frontzahnbereich, auch in engsten, Interdentalräumen und das Konturieren und Finieren, bzw. Vorpolieren von proximalen Füllungsflächen und Kronenrändern.

Dabei ist es auch möglich, eine Beschichtung mit Diamantkörnern mit anderen Korngrössen zu verwenden. So können für die grobe Feile Körner mit einer mittleren Korngrösse von 60 bis 120 $\mu$m, für die mittlere Feile eine mittlere Korngrösse von 30 bis 50 $\mu$m und für die feine Feile 10 bis 20 $\mu$m verwendet werden.

## Patentansprüche

1. Auf ein Gerät für die Zahnbehandlung steckbare Vorrichtung, insbesondere zur Behandlung von Interdentalflächen, mit einem Winkelstück (5), in dem eine rotierende Bewegung in eine Hin- und Herbewegung umgewandelt wird und in dessen Kopf (6) eine hin- und herbewegbare hohle Werkzeughalterung (7) vorgesehen ist, in der eine aus flexiblem Material bestehende Feile (1) eines Werkzeugsatzes abnehmbar befestigt ist, dadurch gekennzeichnet, dass der Bearbeitungsteil (4) der Feile (1) diamantbeschichtet (3) ist, aus Stahlblech besteht und eine derartige Biegsamkeit und geringe gleichmäßige Dicke besitzt, daß er sich leicht der Form des zu bearbeitenden Teiles anpassen kann, daß die Feile (1) ein durchgehend hohles Halteteil (2) aufweist und daß der Kopf (6) des Winkelstücks (5) mit einer Wasserzuleitung (8) versehen ist, die im Kopfinnern an die hin- und herbewegbare hohle Werkzeughalterung (7) geführt ist, wodurch das Wasser durch die Werkzeughalterung (7) und durch das Halteteil (2) der Feile (1) an dessen Bearbeitungsfläche (4) gelangt.

2. Vorrichtung nach Anspruch 1, dadurch gekennzeichnet, dass der Werkzeugsatz eine Feile mit einem Bearbeitungsteil (4) von etwa 0,1 mm Dicke und einer Diamantbeschichtung (3) mit einer mittleren Korngrösse von 10 $\mu$m bis 20 $\mu$m, insbesondere etwa 15 $\mu$m, eine Feile mit einem Bearbeitungsteil (4) von etwa 0,1 bis 0,15 mm Dicke und einer Diamantbeschichtung (3) mit einer mittleren Korngrösse von 30 $\mu$m bis 50 $\mu$m,

insbesondere etwa 40 $\mu$m, und eine Feile mit einem Bearbeitungsteil (4) von etwa 0,2 mm Dicke und einer Diamantbeschichtung (3) mit einer mittleren Korngrösse von 60 $\mu$m bis 120 $\mu$m, insbesondere etwa 80 $\mu$m, enthält, wobei alle Feilen einseitig beschichtet sind.

## Claims

1. Device adapted to be plugged on a dental tool, in particular for the treatment of interdental surfaces, with an angle piece (5) in which a rotary motion is transformed in a reciprocating motion and in the head (6) of which a hollow tool holder (7) executing a reciprocating motion is provided in which a file (1) of a set of tools of flexible material is removably secured, characterized in that the working part (4) of the file (1) is of diamond coated (3) steel sheet with such a flexibility and a weak uniform thickness that it fits easily to the form of the part to be worked, in that the file (1) comprises a hollow through retaining part (2) and in that the head (6) of the angle piece (5) is provided with a water supply-pipe (8) which is connected in the inner part of the head to the reciprocating tool holder (7) so that the water reaches through the tool holder (7) and the retaining part (2) of the file (1) the working surface (4) of the latter.

2. Device according to claim 1, characterized in that the set of tools comprises a file with a working part (4) having a thickness of about 0,1 mm and a diamond coating (3) having an average size of grain of 10 $\mu$m to 20 $\mu$m, particularly of about 15 $\mu$m, a file with a working part (4) having a thickness of about 0.1 to 0.15 mm and a diamond coating (3) having an average size of grain of 30 $\mu$m to 50 $\mu$m, particularly of about 40 $\mu$m and a file with a working part (4) having a thickness of about 0.2 mm and a diamond coating (3) having an average size of grain of 60 $\mu$m to 120 $\mu$m, particularly of about 80 $\mu$m, all the files being one-sided coated.

## Revendications

1. Dispositif enfichable sur un instrument de traitement dentaire, en particulier pour surfaces interdentaires, avec une pièce coudée (5) dans laquelle un mouvement de rotation est transformé en mouvement de va-et-vient et dans la tête (6) de laquelle est prévu un porte-outils creux (7) mobile en va-et-vient dans lequel une lime (1) d'un jeu d'outils en matériau flexible est fixée de manière amovible, caractérisé en ce que la partie de travail (4) de la lime (1) est enduite de diamant (3), qu'elle est en tôle d'acier et qu'elle possède une flexibilité telle et une faible épaisseur uniforme qu'elle peut s'adapter facilement à la forme de la partie à travailler, en ce que la lime (1) comprend une partie de retenue creuse et traversante (2) et en ce que la tête (6) de la pièce coudée (5) est pourvue d'une conduite d'amenée d'eau (8) qui est raccordée à l'intérieur de la tête au porte-outils mobile en va-et-vient (7), de sorte que l'eau parvient à travers le porte-outils (7) et la partie de retenue (2) de la lime (1) à la surface de travail (4) de cette dernière.

2. Dispositif selon la revendication 1, caractérisé en ce que le jeu d'outils comprend une lime avec une partie de travail (4) d'environ 0,1 mm d'épaisseur et une enduction de diamant (3) avec une grandeur moyenne de grain de 10 μm à 20 μm, en particulier d'environ 15 μm, une lime avec une partie de travail (4) d'environ 0,1 à 0,15 mm d'épaisseur et une enduction de diamant (3) avec une grandeur moyenne de grain de 30 μm à 50 μm, en particulier d'environ 40 μm et une lime avec une partie de travail (4) d'environ 0,2 mm d'épaisseur et une enduction de diamant (3) avec une grandeur moyenne de grain de 60 μm à 120 μm, en particulier d'environ 80 μm, toutes les limes étant enduites d'un seul côté.

FIG.1

FIG.2

FIG.3

FIG.4

FIG.5